# EUROPÄISCHE PATENTSCHRIFT

(11) **EP 2 692 441 B1**
(45) Veröffentlichungstag und Bekanntmachung des Hinweises auf die Patenterteilung: **21.10.2015**
(21) Anmeldenummer: 13175097.8
(22) Anmeldetag: 04.07.2013
(51) Int. Cl.: B02C 1/02, B28D 5/00, C01B 33/02, C30B 29/06, B02C 1/14, B02C 19/08, C01B 33/035

(54) **Vorrichtung und Verfahren zum Zerkleinern eines polykristallinen Siliciumstabs**
Apparatus and method for comminuting a polycrystalline silicon rod
Dispositif et procédé de broyage d'une tige de silicium polycristallin

(30) Priorität: 01.08.2012 DE 102012213565
(43) Veröffentlichungstag der Anmeldung: 05.02.2014
(73) Patentinhaber: Wacker Chemie AG, 81737 München (DE)
(72) Erfinder: Mattes, Joachim, 84489 Burghausen (DE); Grübl, Peter, 94428 Eichendorf (DE); Riess, Siegfried, 5121 Tarsdorf (AT)
(74) Vertreter: Killinger, Andreas

(56) Entgegenhaltungen:
- JP-A- H1 015 422
- US-A1- 2006 243 834
- US-A1- 2011 068 206

## Beschreibung

Die Erfindung betrifft eine Vorrichtung und ein Verfahren zum Zerkleinern von polykristallinem Silicium.

Polykristallines Silicium wird durch thermische Spaltung von Siliciumverbindungen, wie beispielsweise Trichlorsilan, in einem sog. Siemens-Reaktor gewonnen und fällt dabei in Form von polykristallinen Stäben an.

Zur Herstellung von Einkristallen mittels Tiegelziehen müssen die polykristallinen Stäbe zunächst in Bruchstücke zerkleinert werden. Auch für Anwendungen in der Solarindustrie müssen die gewachsenen polykristallinen Stäbe zunächst in Bruchstücke zerkleinert werden.

Im Stand der Technik sind verschiedene Verfahren zur Zerkleinerung von Siliciumstäben bekannt.

US 5,660,335 A offenbart ein Zerkleinerungsverfahren, bei dem mit einem Hochdruckwasserstrahl auf einen Kristallstab geschossen wird.

In US 6,360,755 B1 ist ein Verfahren beschrieben, bei dem ein Kristallstab mit Hilfe von Stoßwellen, erzeugt durch elektrische Energie, zerkleinert wird.

In US 4,871,117 A wird vorgeschlagen, einen Kristallstab zunächst durch Wärmeeinwirkung zu dekompaktieren und ihn anschließend durch mechanische Krafteinwirkung zu zerkleinern.

US 2010/025060 A1 beschreibt ein Brechwerkzeug, umfassend ein Antriebsmittel für einen pneumatischen Kolben, um den in einem Gehäuse installierten Kolben mittels Luftdruck aus einer Rückzugsposition zu einer Projektionsposition zu führen, ein mit dem Gehäuse verbundenes und sich in Bewegungsrichtung des Kolbens erstreckendes Führungsrohr, und einen Hammerkopf.

Der hintere Endabschnitt des Hammerkopfes ist beweglich im vorderen Endabschnitt des Führungsrohrs eingeführt. Wenn der Kolben aus der Rückzugsposition in die Projektionsposition bewegt wird, kollidiert das vordere Ende des Kolbens mit dem hinteren Ende des Hammerkopfs.

US 7,360,727 B2 offenbart eine mechanische Brechvorrichtung zum Zerkleinern eines polykristallinen Siliciumstabs, umfassend eine Unterlage sowie Zerkleinerungsmeißel und Gegenmeißel, wobei Zerkleinerungsmeißel und Gegenmeißel eine Längsachse besitzen, die im rechten Winkel zur Längsachse der Unterlage und parallel zur Oberfläche der Unterlage ausgerichtet ist, und Zerkleinerungsmeißel und Gegenmeißel derart beweglich sind, dass ein auf der Oberfläche der Unterlage liegender zu zerkleinernder Siliciumstab zwischen den Meißeln derart justiert werden kann, dass alle Meißel im Bereich des Siliciumstabs Kontakt zum Siliciumstab besitzen und die Zerkleinerungsmeißel vor und hinter dem Siliciumstab in Richtung ihrer Längsachse bis auf einen Sicherheitsabstand zum Gegenmeißel gefahren werden können und die Zerkleinerungsmeißel mittels einer schlagförmigen Bewegung in Richtung ihrer Längsachse auf den Siliciumstab einwirken und diesen zertrümmern.

Ebenso offenbart US 7,360,727 B2 ein Verfahren zum mechanischen Zerkleinern eines polykristallinen Siliciumstabs, bei dem sich der polykristalline Siliciumstab auf einer höhenverstellbaren Unterlage befindet und dort zwischen Zerkleinerungsmeißel und Gegenmeißeln derart justiert wird, dass alle Meißel im Bereich des Siliciumstabs Kontakt zum Siliciumstab besitzen und Zerkleinerungsmeißel und Gegenmeißel vor oder hinter dem Siliciumstab einander bis auf einen Sicherheitsabstand angenähert werden und anschließend bei allen am Siliciumstab anliegenden Zerkleinerungsmeißeln ein wiederkehrender Schlagimpuls gestartet wird, der eine Zerkleinerung des Siliciumstabs bewirkt.

US 2011/068206 A1 beschreibt einen Brecher, um einen Siliciumklumpen effizient zu zerkleinern, wobei wenig feines Bruchmaterial (Pulver) entsteht. Das Brechwerkzeug umfasst einen Hammerkopf, der mit einem Kolben verbunden ist, wobei der Hammerkopf sich ohne Druckluft in einer Ruheposition befindet und durch Anwendung von Druckluft von der Ruheposition bewegt wird, um mit einem Siliciumklumpen zu kollidieren. Im Brecher steht eine Vielzahl voneinander beabstandeter Brechwerkzeuge mit jeweils einem Hammerkopf dem auf einer Unterlage befindlichen Siliciumklumpen gegenüber.

JP H10 15422 A offenbart ein Verfahren, bei dem ein polykristalliner Siliciumstab zunächst auf 400-800°C aufgeheizt und dann auf weniger als 100°C abgekühlt wird, so dass viele feine Risse im Kristall entstehen. Dann wird der Siliciumstab zwischen unbeweglichem Amboss und Meißel zerkleinert.

Es hat sich gezeigt, dass mit den im Stand der Technik bekannten Verfahren ein optimales Bruchergebnis nicht zu erreichen ist. Es ist zu viel Energie oder eine Vielzahl von wiederkehrenden Schlägen nötig, um das Silicium zu zerkleinern. Dies hat negative Auswirkungen auf die Kontamination des Siliciums. Zudem ist die Lebensdauer der verwendeten Bauteile unbefriedigend.

Aus dieser Problematik ergab sich die Aufgabenstellung der vorliegenden Erfindung.

Diese Aufgabe wird gelöst durch eine Vorrichtung zum Zerkleinern eines polykristallinen Siliciumstabs, umfassend eine Unterlage sowie wenigstens einen beweglichen Zerkleinerungsmeißel und wenigstens einen unbeweglichen Amboss, wobei der wenigstens eine Zerkleinerungsmeißel eine Längsachse besitzt, die parallel oder nahezu parallel zur Oberfläche der Unterlage ausgerichtet ist, wobei ein auf der Oberfläche der Unterlage liegender, zu zerkleinernder Siliciumstab jeweils zwischen Zerkleinerungsmeißel und Amboss derart justiert werden kann, dass Zerkleinerungsmeißel und Amboss jeweils im Bereich des Siliciumstabs Kontakt zum Siliciumstab besitzen können und jeweils ein Anlagepunkt von Siliciumstab und Amboss sowie eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegen, wobei Amboss und Siliciumstab genau einen Anlagepunkt besitzen und die diesen Anlagepunkt enthaltende Oberfläche des Ambosses gekrümmt ist.

Die Aufgabe der Erfindung wird auch gelöst durch ein Verfahren zum Zerkleinern eines polykristallinen Siliciumstabs, bei dem sich der polykristalline Siliciumstab auf einer Unterlage befindet und dort zwischen wenigstens einem beweglichen Zerkleinerungsmeißel und wenigstens einem unbeweglichen Amboss derart justiert wird, dass Zerkleinerungsmeißel und Amboss jeweils im Bereich des Siliciumstabs Kontakt zum Siliciumstab besitzen können, wobei Amboss und Siliciumstab genau einen Anlagepunkt besitzen und die diesen Anlagepunkt enthaltende Oberfläche des Ambosses gekrümmt ist, und der Anlagepunkt von Siliciumstab und Amboss sowie eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegen, und anschließend ein Schlagimpuls gestartet wird, wobei sich beim Start des Schlagimpulses Meißel und Siliciumstab nicht berühren, wobei der Zerkleinerungsmeißel eine Zerkleinerung des Siliciumstabs bewirkt.

Beim Siliciumstab handelt es sich vorzugsweise um einen weitgehend rotationssymmetrischen Körper mit einem im Wesentlichen kreisförmigen Querschnitt, der eine Längsachse und eine Querachse umfasst.

Vorzugsweise bilden Längsachse der Zerkleinerungsmeißel oder eine zur Längsachse des Zerkleinerungsmeißels parallele und um bis zu 30% des Stabdurchmessers von der Längsachse des Zerkleinerungsmeißel beabstandete Achse, Querachse durch Stabzentrum oder eine dazu parallele und von dieser um bis zu 30% des Stabdurchmessers abweichende Achse und Anlagepunkt am Amboss eine Achse.

Vorzugsweise werden mehrere Zerkleinerungsmeißel und die gleiche Zahl an Ambossen verwendet.

Jeweils auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegt eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs sowie ein Anlagepunkt zwischen Siliciumstab und Amboss. Mit anderen Worten können sowohl Ambosse als auch Zerkleinerungsmeißel unabhängig voneinander jeweils um bis zu 30% in beide Richtungen von der durch ein Stabzentrum laufenden Querachse des Siliciumstabs verschoben sein.

Vorzugsweise ist die auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegende Querachse des Siliciumstabs um bis zu 10% des Stabdurchmessers von der durch das Stabzentrum verlaufenden Querachse des Stabs entfernt.

Vorzugsweise ist die auf der Längsachse des Zerkleinerungsmeißels oder auf einer zur Längsachse des Zerkleinerungsmeißels parallelen und um bis zu 10% des Stabdurchmessers von der Längsachse des Zerkleinerungsmeißel beabstandeten Achse liegende Querachse des Siliciumstabs um bis zu 30% des Stabdurchmessers von der durch das Stabzentrum verlaufenden Querachse des Stabs entfernt.

Vorzugsweise ist die auf der Längsachse des Zerkleinerungsmeißels oder auf einer zur Längsachse des Zerkleinerungsmeißels parallelen und um bis zu 10% des Stabdurchmessers von der Längsachse des Zerkleinerungsmeißel beabstandeten Achse liegende Querachse des Siliciumstabs um bis zu 10% des Stabdurchmessers von der durch das Stabzentrum verlaufenden Querachse des Stabs entfernt.

Idealerweise liegen die durch das Stabzentrum verlaufende Querachse des Siliciumstabs und die Längsachse des Zerkleinerungsmeißels sowie der Anlagepunkt zwischen Amboss und Siliciumstab auf einer gemeinsamen Achse, was mit anderen Worten bedeutet, dass Anlagepunkt zwischen Amboss und Siliciumstab sowie Stabzentrum des Siliciumstabs auf der Längsachse des Zerkleinerungsmeißels liegen.

Unter Stabzentrum des Siliciumstabs ist ein Punkt auf der geometrischen Achse (Schwerpunktachse, die die Querschnittsschwerpunkte miteinander verbindet) des zylinderförmigen Stabs zu verstehen.

Unter Anlagepunkt ist ein Berührungspunkt zwischen Amboss und Siliciumstab zu verstehen.

Der Zerkleinerungsmeißel ist beweglich ausgestaltet und kann vorzugsweise in zwei Richtungen parallel zur Schlagrichtung und senkrecht zur Ebene der Unterlage bewegt werden, um Durchmesserunterschiede der Siliciumstäbe auszugleichen. Vorzugsweise ist die gesamte Brecheinheit umfassend mehrere Zerkleinerungsmeißel beweglich ausgestaltet. Alternativ könnte zur Bewegung der Zerkleinerungsmeißel parallel zur Schlagrichtung und senkrecht zur Ebene der Unterlage auch die Unterlage selbst in gleicher Weise beweglich gestaltet werden.

Der Zerkleinerungsmeißel ist vorzugsweise parallel oder bis zu 30° geneigt zur Unterlage ausgerichtet. Besonders bevorzugt ist eine Neigung des Zerkleinerungsmeißels von 10°, im Idealfall sind Zerkleinerungsmeißel und Unterlage parallel angeordnet.

Pro Zerkleinerungsmeißel ist ein gegenüberliegender Amboss vorgesehen, der relativ zur Unterlage unbeweglich ist und vorzugsweise die Form eines Zylinders oder eines Halbzylinders hat. Im Rahmen der Erfindung soll die zylindrische Form auch Bauteile mit einem elliptischen oder einem halbelliptischen Querschnitt umfassen. Die Oberfläche des Ambosses, die mit dem Siliciumstab in Berührung kommt, ist gekrümmt. Durch diese Form kann sichergestellt werden, dass der Siliciumstab mit dem Amboss genau einen Berührungspunkt bzw. Anlagepunkt hat. Der Amboss kann einteilig und mehrteilig aufgebaut sein. Auch der mehrteilige Aufbau des Amboss sollte so gestaltet sein, dass genau ein Anlagepunkt zwischen Amboss und Siliciumstab besteht.

Wenn im Rahmen der Erfindung von einem unbeweglichen und starr fixierten Amboss die Rede ist, ist darunter zu verstehen, dass der Amboss während des Betriebs, also während Schlagimpulse ausgelöst werden, unbeweglich und starr fixiert ist. Ansonsten können die Ambosse durchaus beweglich gestaltet sein, um ein Justieren von Amboss, Siliciumstab und Zerkleinerungsmeißeln zu erleichtern.

Die geometrische Achse des Ambosses steht vorzugsweise senkrecht oder nahezu senkrecht zur Schlagachse. Die geometrische Achse des Ambosses kann um bis zu 30° gegen die Schlagachse geneigt sein. Besonders bevorzugt ist eine Neigung des Ambosses von 10°, im Idealfall stehen die geometrische Achse des Ambosses und Schlagachse senkrecht zueinander. Die Schlagachse ist durch die Längsachse des Zerkleinerungsmeißels gegeben.

Ein Ende des Zerkleinerungsmeißels, das mit dem Siliciumstab in Berührung kommt, weist vorzugsweise eine runde Form auf und umfasst vorzugsweise keine Abflachung.

Bei der Zerkleinerung des Siliciumstabs erfolgt vorzugsweise nur ein einziger Schlag mit dem Zerkleinerungsmeißel. Falls mehrere Zerkleinerungsmeißel verwendet werden, erfolgt pro Zerkleinerungsmeißel genau ein Schlag. Bei Start des Schlagimpulses wird vorzugsweise ein Abstand des Endes des Zerkleinerungsmeißels zum Siliciumstab so gewählt, dass er dem voreingestellten Hub des Zerkleinerungsmeißels abzüglich der möglichen Eindringtiefe in den Siliciumstab entspricht. Unter Hub ist eine voreingestellte lineare Bewegung des Zerkleinerungsmeißels in Richtung Werkstück zu verstehen. Der Hub lässt sich üblicherweise durch verstellbare Anschläge variieren. Je größer der Hub, desto höher die Schlagenergie.

Die Ambosse sind im Betrieb vorzugsweise starr fixiert.

Schlagachse bzw. Längsachse des wenigstens einen Zerkleinerungsmeißels und Unterlage sind vorzugsweise in einem Winkel von 0-90° gegen die Horizontale geneigt. Bei einer Neigung von 90° berührt der Siliciumstab die Unterlage (die in diesem Fall eine seitliche Begrenzung der Vorrichtung darstellt) und liegt auf dem Amboss auf. Besonders bevorzugt ist ein Neigungswinkel von 1-45°, so dass ein auf der Unterlage liegender Siliciumstab durch sein Eigengewicht gegen den wenigstens einen Amboss rollt. Ganz besonders bevorzugt ist dabei ein Neigungswinkel von 1-20°.

Amboss(e) und die Ende(n) von Zerkleinerungsmeißel(n) bestehen vorzugsweise aus Wolframcarbid (WC). Alternativ können für Amboss(e) und die Ende(n) von Zerkleinerungsmeißel(n) hartmetallbeschichtete Stähle oder Keramiken zum Einsatz kommen.

Falls mehrere Zerkleinerungsmeißel in Reihe geschaltet sind, erfolgt eine Schlagsequenz über die Länge eines Siliciumstabs vorzugsweise wechselweise von außen nach innen.

Zunächst erfolgt z.B. ein Schlagimpuls durch einen der außen liegenden Zerkleinerungsmeißel, dann ein Schlagimpuls durch den auf der anderen Seite der Länge des Siliciumstabs anliegenden Zerkleinerungsmeißel, und anschließend alternierend Schlagimpulse durch die weiter innen liegenden Zerkleinerungsmeißel.

Diese alternierenden Schläge erfolgen vorzugsweise in einem vergleichsweise kurzen Zeitintervall von 5-1000ms. Um die Beeinflussung von benachbarten Meißeln zu vermeiden und somit die Standzeit der Meißel zu erhöhen, wird vorzugsweise nach jedem Schlag und vor Auslösen des Folgemeißels der Vorgängermeißel wieder zurückgefahren.

Bei einer Vielzahl von Zerkleinerungsmeißel können die verschiedenen Bereiche einer Zerkleinerungsmeißelreihe in Gruppen aufgeteilt werden, um die Schlagfolgen in allen Gruppen parallel ablaufen zu lassen.

Alternativ ist es möglich parallel oder abwechselnd zu einer Schlagfolge von außen nach innen eine Schlagfolge vom Zentrum der Zerkleinerungsmeißelreihe aus alternierend nach außen zu starten.

Bei ausreichendem Abstand zw. Zerkleinerungsmeißeln können die Schläge einzelner Zerkleinerungsmeißel in einer Schlagfolge auch zeitgleich erfolgen.

Während im vorstehenden einige als bevorzugt angesehene Ausführungsformen der Schlagfolgemuster beschrieben sind, ist es offensichtlich, dass Veränderungen der Schlagfolgemuster möglich sind, ohne vom Geist der Erfindung abzuweichen. Die Erfindung soll deshalb in keiner Weise auf die beschriebenen konkreten Ausführungsformen beschränkt sein.

Die Erfinder haben durch eine Vielzahl an Brechversuchen erkannt, dass ein optimales Bruchergebnis mit der geringstmöglichen Schlagenergie nur dann zu erreichen ist, wenn jeweils ein Anlagepunkt von Siliciumstab und Amboss sowie eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegen.

Es wurde auch untersucht, wie sich unterschiedliches Siliciummaterial verhält. Dazu wurden Versuche mit leicht brüchigem, porösem Material sowie mit kompaktem Silicium durchgeführt. Auch die Steifigkeit der Ambosse wurde in den Versuchen variiert.

Dabei hat sich gezeigt, dass bei Verwendung von harten und starr fixierten Ambossen bei kompaktem Material die niedrigste Schlagenergie benötigt wird. Bereits eine Schlagenergie von 200 J kann ausreichen, um einen kompakten Stab zu zerkleinern. Erstmals konnten kompakte Siliciumstäbe mit Stabdurchmesser >150mm mit geringer Schlageenergie ohne Verwendung eines Mehrfachschlags kontaminationsarm gebrochen werden.

Bei leicht brüchigem Material hat die Ausgestaltung des Amboss geringeren Einfluss auf das Bruchverhalten. Unabhängig von der Ausgestaltung des Amboss reichen etwa 75 J aus, um einen solchen Stab zu zerkleinern. Bei leicht brüchigem Material kann auf einen Amboss ganz verzichtet werden, wie zuvor bereits erwähnt.

Bei kompaktem Silicium reicht eine Schlagenergie von 400 J aus, wenn ein harter und starr fixierter Amboss verwendet wird. Beispielsweise eignet sich hierfür ein Amboss aus Wolframcarbid, der durch eine massive, starre Rahmenkonstruktion fixiert ist. Wird stattdessen ein Amboss aus einem weicheren, nachgiebigen Material verwendet oder zur Fixierung des Ambosses eine federnde Rahmenkonstruktion verwendet, ist eine Schlagenergie von mindestens 1000 J nötig, um einen kompakten Stab zu zertrümmern.

Eine geringere Schlagenergie hilft die Haltbarkeit/Langlebigkeit der durch den Brechvorgang belasteten Komponenten zu steigern.

Außerdem reduziert eine geringe Schlagenergie den Kontaminationseintrag auf das polykristalline Silicium.

Bei mehreren Anlagepunkten, einer Anlagelinie oder -fläche teilt sich die Schlagkraft über den Stab auf und beeinflusst so das Bruchergebnis negativ.

Im Stand der Technik vorgeschlagene Lösungen mit Prismenauflage oder einer flachen Anlagefläche in Form einer Gegenplatte sind deshalb für das Bruchergebnis äußerst nachteilig. Eine schräg gestellte Anlagefläche bewirkt, dass der rückwirkende Schlagimpuls, der eine zusätzliche Bruchwirkung hat, abgelenkt wird.

Die optimale Bruchanordnung, die vorsieht, dass die Schlagachse parallel zur Unterlage liegt, minimiert die Belastungen der Unterlage beim Bruchvorgang.

Daher kann die Unterlage aus Materialien gefertigt sein, die bezüglich einer Kontamination des Siliciums unschädlicher sind. Dazu eignen sich beispielsweise Silicium, PU oder andere Kunststoffe.

Die bevorzugte längliche Zylinderform des Ambosses erlaubt die gesamte Abdeckung der zu brechenden Stabdurchmesser. Die Höhe des Ambosses über der Unterlage ist hierzu vorzugsweise so zu wählen, dass sie mindestens dem halben Stabdurchmesser entspricht.

Die Einzelschlagmethode verringert im Vergleich zu einem im Stand der Technik vorgeschlagenen wiederkehrenden Schlagimpuls den Kontaminationseintrag durch Berührung mit Zerkleinerungsmeißel und Amboss.

Der Amboss als Anlagepunkt sollte idealerweise hart und starr fixiert ausgeführt sein, um den Schlagimpuls optimal zu reflektieren. Ein durch Verfahrachsen beweglicher Gegenmeißel - wie im Stand der Technik beansprucht - kann diese Aufgabe nicht erfüllen.

Die leichte Schrägstellung der Vorrichtung (Schlagachse und Unterlage) bewirkt, dass die Siliciumstäbe durch ihr Eigengewicht gegen den Amboss rollen und ein für das optimale Bruchergebnis entscheidender direkter Ambosskontakt sichergestellt ist.

Nachdem die enorme Schlagenergie bei gleichzeitigem Auslösen einer Vielzahl in Reihe angeordneter Zerkleinerungsmeißel das Gesamtsystem auf Dauer schädigen würde, werden Zerkleinerungsmeißel mit gewissen Zeitabständen ausgelöst.

Erfolgt dies jedoch gerichtet von Stabstückende zu Stabstückende, kann das Stabstück in der Folge der Schläge in seiner Position wandern/driften und damit den Brucherfolg mindern.

Eine Schlagfolge, welche abwechselnd von den Stabenden letztlich zur Stabmitte hin erfolgt, verhindert wirksam Positionsveränderungen des Stabes (ohne eine ansonsten notwendige seitliche Klemmung oder Anschlag).

## Patentansprüche

1. Vorrichtung zum Zerkleinern eines polykristallinen Siliciumstabs, umfassend eine Unterlage sowie wenigstens einen beweglichen Zerkleinerungsmeißel und wenigstens einen unbeweglichen Amboss, wobei der wenigstens eine Zerkleinerungsmeißel eine Längsachse besitzt, die parallel oder nahezu parallel zur Oberfläche der Unterlage ausgerichtet ist, wobei ein auf der Oberfläche der Unterlage liegender, zu zerkleinernder Siliciumstab jeweils zwischen Zerkleinerungsmeißel und Amboss derart justiert werden kann, dass Zerkleinerungsmeißel und Amboss jeweils im Bereich des Siliciumstabs Kontakt zum Siliciumstab besitzen können und jeweils ein Anlagepunkt von Siliciumstab und Amboss sowie eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegen, **dadurch gekennzeichnet dass** Amboss und Siliciumstab genau einen Anlagepunkt besitzen und die diesen Anlagepunkt enthaltende Oberfläche des Ambosses gekrümmt ist.

2. Vorrichtung nach Anspruch 1, wobei eine Spitze des Zerkleinerungsmeißels und der Amboss aus Wolframcarbid bestehen.

3. Verfahren zum Zerkleinern eines polykristallinen Siliciumstabs, bei dem sich der polykristalline Siliciumstab auf einer Unterlage befindet und dort zwischen wenigstens einem beweglichen Zerkleinerungsmeißel und wenigstens einem unbeweglichen Amboss derart justiert wird, dass Zerkleinerungsmeißel und Amboss jeweils im Bereich des Siliciumstabs Kontakt zum Siliciumstab besitzen können, und der Anlagepunkt von Siliciumstab und Amboss sowie eine durch ein Stabzentrum verlaufende Querachse des Siliciumstabs oder eine zu jener Querachse parallele und um bis zu 30% eines Stabdurchmessers vom Stabzentrum beabstandete Achse des Siliciumstabs auf der Längsachse des Zerkleinerungsmeißels oder auf einer zur Längsachse des Zerkleinerungsmeißels parallelen und um bis zu 30% des Stabdurchmessers von der Längsachse des Zerkleinerungsmeißel beabstandeten Achse liegen, und anschließend ein Schlagimpuls gestartet wird, wobei sich beim Start des Schlagimpulses Meißel und Siliciumstab nicht berühren, wobei der Zerkleinerungsmeißel eine Zerkleinerung des Siliciumstabs bewirkt, **dadurch gekennzeichnet dass** Amboss und Siliciumstab genau einen Anlagepunkt besitzen und die diesen Anlagepunkt enthaltende Oberfläche des Ambosses gekrümmt ist.

4. Verfahren nach Anspruch 3, wobei der Amboss eine geometrische Achse aufweist, die in einem rechten Winkel oder nahezu in einem rechten Winkel zur Längsachse des Zerkleinerungsmeißels steht.

5. Verfahren nach einem der Ansprüche 3 oder 4, wobei mehrere Zerkleinerungsmeißel in Reihe geschaltet sind und Schlagimpulse in Form einer Schlagsequenz über die Länge eines Siliciumstabs alternierend von außen nach innen erfolgen.

## Claims

1. Apparatus for comminuting a polycrystalline silicon rod, which apparatus comprises a base, as well as at least one movable comminuting tool and at least one immovable anvil, wherein the at least one comminuting tool possesses a longitudinal axis which is oriented parallel or virtually parallel to the surface of the base, wherein a silicon rod to be comminuted, which lies on the surface of the base, can respectively be adjusted between comminuting tool and anvil in such a way that the comminuting tool and the anvil can respectively in the region of the silicon rod have contact with the silicon rod, and a point of contact of silicon rod and anvil, as well as a transverse axis of the silicon rod, which transverse axis runs through a rod center, or an axis of the silicon rod, which axis is parallel to that transverse axis and is distanced by up to 30% of a rod diameter from the rod center, respectively lie on the longitudinal axis of the comminuting tool or on an axis which is parallel to the longitudinal axis of the comminuting tool and is distanced by up to 30% of the rod diameter from the longitudinal axis of the comminuting tool, **characterized in that** the anvil and the silicon rod have precisely one point of contact and that surface of the anvil which contains this point of contact is curved.

2. Apparatus according to Claim 1, wherein a tip of the comminuting tool and the anvil consist of tungsten carbide.

3. Method for comminuting a polycrystalline silicon rod, in which the polycrystalline silicon rod is located on a base and is adjusted there between at least one movable comminuting tool and at least one immovable anvil in such a way that the comminuting tool and the anvil can respectively in the region of the silicon rod have contact with the silicon rod, and the point of contact of silicon rod and anvil, as well as a transverse axis of the silicon rod, which transverse axis runs through a rod center, or an axis of the silicon rod, which axis is parallel to that transverse axis and is distanced by up to 30% of a rod diameter from the rod center lie on the longitudinal axis of the comminuting tool or on an axis which is parallel to the longitudinal axis of the comminuting tool and is distanced by up to 30% of the rod diameter from the longitudinal axis of the comminuting tool, and subsequently a striking momentum is started, wherein, when the striking momentum is started, tool and silicon rod are not touching, whereupon the comminuting tool effects a comminution of the silicon rod, **characterized in that** the anvil and the silicon rod have precisely one point of contact and that surface of the anvil which contains this point of contact is curved.

4. Method according to Claim 3, wherein the anvil has a geometric axis, which stands at a right angle, or virtually at a right angle, to the longitudinal axis of the comminuting tool.

5. Method according to one of Claims 3 or 4, wherein a plurality of comminuting tools are connected in series, and striking momentums in the form of a striking sequence are realized over the length of a silicon rod alternatingly from outside to inside.

## Revendications

1. Dispositif de broyage d'une barre de silicium polycristallin, comprenant un support ainsi qu'au moins un burin de broyage mobile et au moins une enclume immobile, dans lequel ledit au moins un burin de broyage possède un axe longitudinal, qui est orienté parallèlement ou presque parallèlement à la surface du support, dans lequel une barre de silicium à broyer reposant sur la surface du support peut être ajustée respectivement entre le burin de broyage et l'enclume, de telle manière que le burin de broyage et l'enclume puissent posséder respectivement dans la région de la barre de silicium un contact avec la barre de silicium et que respectivement un point d'application de la barre de silicium et de l'enclume ainsi qu'un axe transversal de la barre de silicium s'étendant à travers un centre de la barre ou un axe de la barre de silicium parallèle à cet axe transversal et espacé du centre de la barre de jusqu'à 30 % du diamètre de la barre soient situés sur l'axe longitudinal du burin de broyage ou sur un axe espacé de l'axe longitudinal du burin de broyage de jusqu'à 30 % du diamètre de la barre, **caractérisé en ce que** l'enclume et la barre de silicium possèdent exactement un point d'application et la surface de l'enclume contenant ce point d'application est incurvée.

2. Dispositif selon la revendication 1, dans lequel une pointe du burin de broyage et l'enclume sont constituées de carbure de tungstène.

3. Procédé de broyage d'une barre de silicium polycristallin, dans lequel la barre de silicium polycristallin se trouve sur un support et y est ajustée entre au moins un burin de broyage mobile et au moins une enclume immobile, de telle manière que le burin de broyage et l'enclume puissent posséder respectivement dans la région de la barre de silicium un contact avec la barre de silicium et que le point d'application de la barre de silicium et de l'enclume ainsi qu'un axe transversal de la barre de silicium s'étendant à travers un centre de la barre ou un axe de la barre de silicium parallèle à cet axe transversal et espacé du centre de la barre de jusqu'à 30 % d'un diamètre de la barre soient situés sur l'axe longitudinal du burin de broyage ou sur un axe parallèle à l'axe longitudinal du burin de broyage espacé de l'axe longitudinal du burin de broyage de jusqu'à 30 % du diamètre de la barre, et on lance ensuite une impulsion de percussion, dans lequel le burin et la barre de silicium ne se touchent pas lors du lancement de l'impulsion de percussion, dans lequel le burin de broyage provoque un broyage de la barre de silicium, **caractérisé en ce que** l'enclume et la barre de silicium possèdent exactement un point d'application et la surface de l'enclume contenant ce point d'application est incurvée.

4. Procédé selon la revendication 3, dans lequel l'enclume présente un axe géométrique, qui se trouve à angle droit ou pratiquement à angle droit avec l'axe longitudinal du burin de broyage.

5. Procédé selon une des revendications 3 ou 4, dans lequel plusieurs burins de broyage sont connectés en série et des impulsions de percussion sous la forme d'une séquence de percussion sont effectuées de l'extérieur vers l'intérieur en alternance sur la longueur d'une barre de silicium.
